(19) **Europäisches Patentamt European Patent Office Office européen des brevets**

(11) **EP 2 374 046 B1**

(12) **FASCICULE DE BREVET EUROPEEN**

(45) Date de publication et mention de la délivrance du brevet:
**02.03.2016 Bulletin 2016/09**

(51) Int Cl.:
***B64F 5/00*** *(2006.01)* ***G01M 5/00*** *(2006.01)*
***G05B 19/418*** *(2006.01)*

(21) Numéro de dépôt: **09796727.7**

(22) Date de dépôt: **22.12.2009**

(86) Numéro de dépôt international:
**PCT/EP2009/067723**

(87) Numéro de publication internationale:
**WO 2010/072744 (01.07.2010 Gazette 2010/26)**

(54) **PROCÉDÉ D'OPTIMISATION DE RÉGLAGES D'UN ASSEMBLAGE DE PIÈCES SOUS CONTRAINTES**

VERFAHREN ZUM OPTIMIEREN VON JUSTIERUNGEN EINER BAUGRUPPE VON TEILEN UNTER BELASTUNG

METHOD FOR OPTIMISING ADJUSTMENTS OF AN ASSEMBLY OF PARTS UNDER STRESS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **22.12.2008 FR 0858945**

(43) Date de publication de la demande:
**12.10.2011 Bulletin 2011/41**

(73) Titulaires:
• **Airbus Group SAS**
**31700 Blagnac (FR)**
• **Ecole Normale Superieure De Cachan**
**94230 Cachan (FR)**

(72) Inventeurs:
• **FRICERO, Benoit**
**F-78160 Marly le Roi (FR)**
• **FALGARONE, Hugo**
**F-75009 Paris (FR)**
• **CHEVASSUS, Nicolas**
**F-92370 Chaville (FR)**
• **BRETEAU, Pierre**
**F-14680 Bretteville sur Laize (FR)**
• **THIEBAUT, François**
**F-92160 Antony (FR)**
• **LARTIGUE, Claire**
**F-92160 Antony (FR)**

(74) Mandataire: **Ipside**
**6, Impasse Michel Labrousse**
**31100 Toulouse (FR)**

(56) Documents cités:
**GB-A- 2 211 318         US-A- 5 380 978**
**US-A1- 2005 172 470**

• **YONG F ET AL: "Virtual Prototyping of Mechanical Assemblies with Deformable Components" JOURNAL OF MANUFACTURING SYSTEMS, SOCIETY OF MANUFACTURING ENGINEERS, DEARBORN, MI, US, vol. 16, no. 3, 1 janvier 1997 (1997-01-01), pages 211-219, XP004081578 ISSN: 0278-6125**

## Description

La présente invention appartient au domaine des structures. Elle concerne plus particulièrement la réalisation d'un assemblage de pièces mécaniques dont au moins une est flexible. Encore plus particulièrement elle vise la recherche des réglages optimaux à effectuer pour obtenir un assemblage conforme à des conditions.

Elle trouve par exemple son application dans le domaine de l'assemblage de pièces d'aéronefs, partiellement flexibles sur une structure de support.

La géométrie de chacune des pièces intervenant dans un assemblage à réaliser, présente la plupart du temps des variations par rapport à un modèle géométrique théorique et ces variations géométriques font que chaque réalisation de cet assemblage est unique.

Les méthodes actuelles d'assemblage sont pour la plupart encore manuelles mais certaines sont assistées par ordinateur. Les méthodes manuelles d'assemblage sont basées sur l'expérience de l'homme du terrain et nécessitent une certaine qualification afin de mener à bien un assemblage donné.

L'homme du terrain doit donc gérer les variations géométriques de chacune des pièces afin, soit de trouver des réglages permettant l'assemblage, soit, s'il ne trouve pas de réglages, de mettre au rebut certaines pièces ou de les retoucher. Ces réglages consistent à effectuer à certains endroits des actions comme par exemple un déplacement, vissage, dévissage afin de mener à bien cet assemblage. Il est évident que ces réglages ne sont pas toujours obtenus lors du premier essai et qu'il faut donc des essais successifs.

Le temps d'assemblage est donc fonction en particulier de l'étendue des variations géométriques des pièces, de la recherche des réglages à faire et de leur mise en application. Ce temps d'assemblage et le nombre de pièces mise au rebut dépendent donc de la pertinence des choix faits par l'homme de terrain.

Le document US 5,380,978 décrit un procédé d'assemblage de pièces mécaniques de carrosserie d'automobile.

Les méthodes d'assemblage assistées par ordinateur sont basées sur un algorithme permettant de calculer un ou plusieurs déplacements à effectuer pour chacune de ces pièces afin de réduire les écarts entre elles et donc de les assembler.

Cet algorithme nécessite des paramètres d'entrée, fournis par l'homme du terrain, qui consistent en une mesure de chacune des pièces avant assemblage dans des référentiels séparés (c'est à dire pour une pièce donnée dans un référentiel local correspondant à cette pièce) ou des référentiels globaux.

Dans certaines de ces méthodes d'assemblage assistées par ordinateur, une pondération peut intervenir pour privilégier le déplacement de certaines pièces par rapport à d'autres. On voit donc que les méthodes d'assemblage assistées par ordinateur facilitent le travail de l'homme du terrain parce qu'elles fournissent une position calculée dite optimale à donner à chacune des pièces.

Ces positions toutefois ne sont calculées qu'à partir de la géométrie des pièces, ce qui peut être limitatif par rapport à la physique des matériaux.

De plus la mesure de chacune des pièces prend un temps considérable à l'homme du terrain pour fournir les paramètres d'entrée nécessaires à l'algorithme et nécessitent certains outils adaptés à la taille des pièces à mesurer ou à leur géométrie spécifique, qui participent au coût de l'assemblage.

L'objectif de cette invention est de diminuer le coût et le temps d'assemblage.

Un second but est de d'améliorer la qualité de l'assemblage en fournissant des réglages optimaux qui tiennent compte d'un comportement réaliste des pièces et en particulier de leur flexibilité.

A cet effet, l'invention vise en premier lieu un procédé de détermination de réglages à effectuer lors d'un d'assemblage de deux ou plusieurs pièces entre elles, ces dites pièces étant conçues à partir d'un modèle géométrique théorique permettant cet assemblage, ces dites pièces pouvant présenter des défauts géométriques par rapport au dit modèle géométrique théorique, ces dites pièces comprenant au moins une pièce flexible, une partie au moins de ces dites pièces comportant des points de réglage géométrique, ce dit assemblage devant respecter des conditions d'assemblage en valeurs maximales d'efforts et déplacements, pour lequel la détermination des réglages préférés à effectuer permettant de réaliser cet assemblage, est faite à partir de mesures de paramètres caractérisant la géométrie avec défaut, lesdites mesures étant effectuées lors de l'assemblage, les paramètres mesurés étant constitués par des écarts géométriques en un ensemble de points des pièces de l'assemblage suffisant à caractériser l'assemblage réel.

Il est clair que la détermination automatique des bons réglages à effectuer pour mener à bien un assemblage par l'homme du terrain résulte en un gain de temps dans l'assemblage et une qualité prévisible et mesurable de cet assemblage.

Selon un mode préféré de réalisation, les paramètres mesurés caractérisant la géométrie avec défaut des pièces à assembler sont constitués par des écarts géométriques en un ensemble de points des pièces de l'assemblage suffisant à caractériser l'assemblage réel.

Plus particulièrement, les mesures à effectuer caractérisant la géométrie avec défaut consistent d'une part en une mesure d'écarts entre des points de contact dit points de contact d'assemblage ou des points où des conditions d'assemblage sont à réaliser respectivement situés sur une pièce de l'assemblage et sur une autre pièce devant s'assembler à la première, dans un état initial de l'assemblage hors contrainte et d'autre part en une mesure d'écarts de ces mêmes points dans un état sous contrainte.

Avantageusement, les points à mesurer dans l'état sous contrainte peuvent être restreints aux points de contact d'assemblage.

Si les paramètres à mesurer sont uniquement des écarts en des endroits sensibles pour l'assemblage, l'outillage nécessaire à ces mesures se trouve simplifié, en le limitant à des outils adaptés uniquement à mesurer des écarts et on optimise ainsi le temps d'assemblage affecté à ces mesures.

Selon un mode avantageux de réalisation, les mesures à faire peuvent être des mesures de dimensions de certaines pièces et ceci dans un repère local à la pièce mesurée.

On comprend que selon l'outillage du site qui réalise l'assemblage, il peut être plus facile d'effectuer des mesures de certaines pièces plutôt qu'un écart entre des points.

Selon un mode préféré de réalisation, les réglages préférés sont calculés en créant une modélisation du comportement mécanique des pièces, à partir de données d'entrée comprenant :

- un maillage et une matrice de rigidité pour chacune des pièces flexibles du modèle théorique,
- les conditions aux limites du modèle théorique,
- des points conditions fonctionnelles, consistant en points de contact théorique entre les pièces et des points où des conditions d'assemblage sont à réaliser,
- des points de réglages et leur plage de variations géométriques maximums estimées,
- ainsi que les paramètres mesurés,

la modélisation consistant à définir un système linéaire qui permette alors de calculer les déformées de la structure des pièces flexibles et les actions extérieures appliquées en chaque point du maillage des pièces flexibles.

En prenant en compte la géométrie de chacune des pièces et leur flexibilité, on obtient un modèle mathématique permettant de simuler l'influence de différents réglages.

Plus particulièrement, les réglages optimaux sont sélectionnés en comparant les conditions d'assemblage obtenues en parcourant une plage de valeurs spécifique à chaque réglage pour l'ensemble des réglages.

On comprend qu'en utilisant le modèle mathématique permettant de simuler l'influence des réglages et en faisant parcourir une plage de valeurs à chacun de ces réglages, on obtient les réglages optimaux à effectuer qui permettent de garantir que l'assemblage respecte les conditions d'assemblage.

Alternativement, les réglages optimaux sont sélectionnés en appliquant un algorithme d'optimisation.

Avantageusement dans ce cas, l'algorithme d'optimisation est un algorithme de moindres carrés ou un algorithme selon une fonction d'optimisation sous contraintes.

L'invention vise également un logiciel, permettant la mise en oeuvre d'un procédé tel qu'exposé.

Sous un autre aspect, l'invention vise également un procédé d'assemblage de deux ou plusieurs pièces entre elles, ces dites pièces étant conçues à partir d'un modèle géométrique théorique permettant cet assemblage, ces dites pièces pouvant présenter des défauts géométriques par rapport au dit modèle géométrique théorique, ces dites pièces comprenant au moins une pièce flexible, une partie au moins de ces dites pièces comportant des points de réglage géométrique, ce dit assemblage devant respecter des conditions d'assemblage en valeurs maximales d'efforts et déplacements, comportant des étapes de :

- assemblage de toutes les pièces pouvant être assemblées entre elles sans avoir à appliquer de contrainte mécanique, formant ainsi un ensemble d'éléments dits pré-assemblés,
- positionnement des éléments pré-assemblés les uns par rapport aux autres pour se rapprocher de l'assemblage final visé,
- mesure d'écarts géométriques (distance et orientation) entre certains points d'au moins une partie des pièces, en l'absence de contraintes mécaniques,
- mise en contrainte, dans laquelle les éléments sont assemblés entre eux, en réalisant toutes les liaisons mécaniques entre pièces à assembler, en appliquant les efforts mécaniques nécessaires à assurer ces liaisons,
- mesure des écarts géométriques sous contrainte,
- détermination de réglages préférés minimisant la résultante des efforts et déplacements en un ensemble de points de maillage des pièces flexibles, cette détermination étant réalisée par un procédé tel qu'exposé ci-dessus,
- application de ces réglages préférés aux pièces réglables.

La description qui va suivre, donnée uniquement à titre d'exemple d'un mode de réalisation de l'invention, est faite en se référant aux figures annexées dans lesquelles :

- la figure 1 représente les étapes du procédé lors de la réalisation d'un assemblage.

- la figure 2 représente un schéma de condition aux limites de déplacements imposés.
- la figure 3 représente un schéma de condition aux limites de d'effort imposé.
- la figure 4 représente un schéma de condition aux limites d'une liaison impliquant une raideur.
- La figure 5 illustre les paramètres définissant les déformées de la structure d'une pièce flexible en un point.
- la figure 6a représente de façon schématique un composant flexible et un composant rigide avant assemblage dans un état non contraint.
- la figure 6b représente de même un composant flexible mis en condition d'assemblage et un composant rigide dans un état contraint avant réglage.
- La figure 6c représente de même un composant flexible et un composant rigide assemblés dans un état contraint et soumis à un réglage.

L'invention est destinée à être utilisée lors de la réalisation d'un assemblage d'un ensemble de pièces mécaniques.

On appelle, dans la présente invention, assemblage la réalisation d'un ensemble de liaisons mécaniques prédéfinies entre des pièces. Chaque liaison correspond à fixer une distance et une orientation préalablement choisies entre deux pièces en un point donné. Le plus souvent, ces liaisons créent entre les pièces à assembler un ensemble hyperstatique.

L'ensemble de ces liaisons forment les conditions de l'assemblage.

La géométrie, regroupant dans la présente définition, l'ensemble des pièces intervenant dans un assemblage à réaliser, présente la plupart du temps des variations par rapport à un modèle géométrique théorique.

Ces variations géométriques font que chaque réalisation de cet assemblage est unique.

Pour la suite de la description, on appellera assemblage réel, un assemblage à réaliser sur des pièces réelles, donc comportant éventuellement des défauts géométriques de fabrication, en suivant un assemblage modélisé dit théorique.

La conception de l'assemblage théorique (pièce à fixer sur une structure de support dont la géométrie théorique est connue) est une fonction connue de l'homme de l'art, et n'est donc pas détaillée dans cette description.

L'invention a pour but de fournir les réglages préférés à appliquer pour mener à bien une réalisation de cet assemblage en fonction des variations géométriques des pièces réelles constituant cet assemblage par rapport à leur modèle géométrique théorique et en fonction des paramètres physiques des pièces et de l'assemblage théorique.

On considère dans la présente invention qu'au moins certaines pièces, connues, constituant l'assemblage sont flexibles (déformables sous l'effet d'efforts mécaniques), les autres étant considérées comme rigides.

On considère qu'au moins une pièce est supposée flexible et qu'au moins une pièce est considérée comme rigide. Il n'existe pas de limite connue au nombre de pièces flexibles.

Une mise en oeuvre préférée du procédé selon l'invention comporte un logiciel mettant en oeuvre un algorithme de calcul, une interface d'entrée de ce logiciel permettant d'enregistrer des données d'entrée et une interface de sortie permettant de fournir des données de sortie.

Cet algorithme est préférentiellement codé dans un langage informatique et mis en oeuvre dans un ordinateur standard de type PC, sous forme d'une application utilisable par l'homme du terrain.

Les données d'entrée de cet algorithme comportent des données de deux types :

Le premier type de données d'entrée de l'algorithme correspond à des données liées à la conception de cet assemblage théorique. Ces données de premier type sont :

- un maillage et une matrice de rigidité pour chacune des pièces flexibles du modèle théorique.
- les conditions aux limites (matrice et valeurs en chaque point du maillage) du modèle théorique.
- des points de contact (liaison) entre les pièces et des points où des conditions d'assemblage sont à réaliser. L'ensemble de ces points sont nommés points de conditions fonctionnelles. Les points de contact sont par la suite nommés points de contact théorique pour les distinguer des points de contact réels lors d'un assemblage réel. Ces points sont regroupés par famille de conditions. Par exemple si un point $C_{11}$ sur une pièce 11 doit être en contact avec un point $C_{12}$ sur une pièce 12 différente de la pièce 11, le couple ($C_{11}$, $C_{12}$) forme une même famille avec comme condition que l'écart entre $C_{11}$ et $C_{12}$ doit être théoriquement égal à zéro, et donc, dans un assemblage réel, cet écart doit être inférieur à un seuil défini.
- des points de réglage et leur plage de variations géométriques maximums estimées. Un point de réglage est un point pour lequel on autorise l'homme de terrain à modifier la position de ce point de contact.

Ces données de premier type étant spécifiques à l'assemblage théorique peuvent être pré-chargées dans l'algorithme ou dans une bibliothèque de données associée à cet algorithme.

Le deuxième type de données d'entrée de l'algorithme correspond à des données liées à l'assemblage réel.

Elles sont constituées de mesures à effectuer au début et/ou au cours de l'assemblage réel, qui caractérisent l'assemblage réel par rapport à l'assemblage théorique.

Les données de sortie du logiciel sont constituées des réglages préférés à appliquer aux points réglables pour réaliser l'assemblage réel, en minimisant par exemple la résultante des efforts et/ou déplacements de certains points.

Afin de décrire l'algorithme utilisé dans le procédé selon l'invention, il est utile de définir dans un premier temps les données dites « conditions aux limites », puis dans un deuxième temps décrire le modèle mathématique utilisé dans l'algorithme et dans un troisième temps la méthode utilisée par l'algorithme afin d'obtenir des réglages optimaux à fournir comme données de sortie.

Cet algorithme est décrit, dans le but de simplifier l'exposé et les équations mathématiques, en prenant le cas particulier de l'assemblage d'une pièce flexible 11 sur une pièce rigide 12. La généralisation de cet algorithme à un nombre arbitrairement grand de pièces flexibles 11 et de pièces rigides 12 est uniquement une question de puissance de calcul.

On considère qu'on a obtenu un assemblage idéal si la pièce flexible 11 est en contact avec la pièce rigide 12 sur tous ses points de contact théorique et que les points qui doivent réaliser des conditions d'assemblage répondent à ces conditions.

Il existe pour ce problème trois types de conditions aux limites.

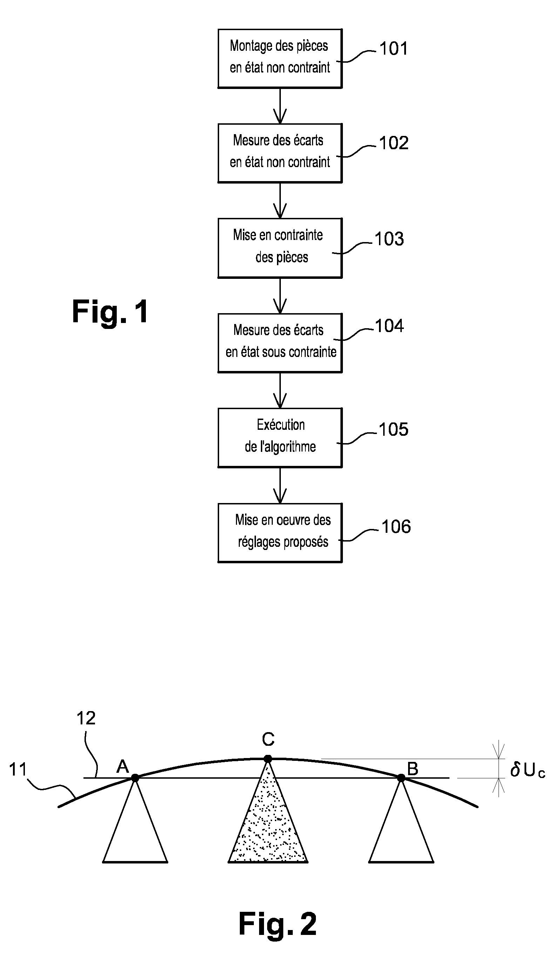

CL1 - Le premier type de condition aux limites concerne les déplacements imposés. Il est illustré par la figure 2. Lorsqu'on impose un déplacement, par exemple à deux points A et B d'une pièce flexible 11, pour que cette pièce 11 soit en contact avec une pièce rigide 12, il faut provoquer un déplacement $\delta U_c$ au point C de la pièce flexible 11 pour que la pièce flexible 11 soit aussi en contact avec la pièce rigide 12 en ce point C.

On crée donc des systèmes hyperstatiques à partir du moment où la pièce 11 n'a pas exactement la même courbure que la pièce rigide 12.

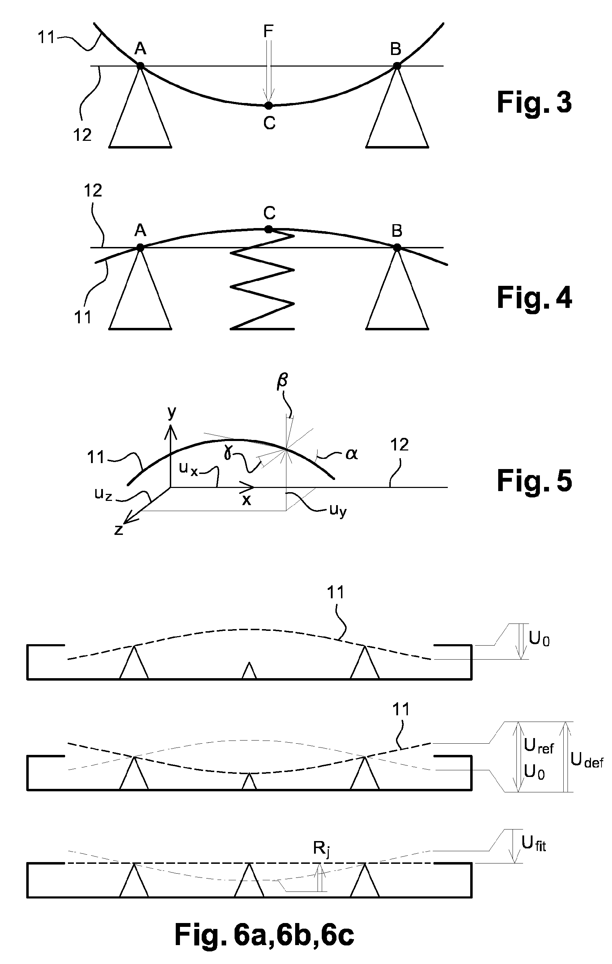

CL2 - Le deuxième type de condition aux limites concerne les efforts imposés. Il est illustré par la figure 3. Lorsqu'on impose un effort extérieur F en un point C de la pièce flexible 11, les conditions aux limites en C traduisent le comportement de C.

CL3 - Le troisième type de condition aux limites concerne les liaisons impliquant une raideur comme par exemple un joint. Ce troisième type illustré par la figure 4 traduit la relation linéaire entre l'effort imposé et le déplacement dans ce type de liaison.

Le modèle mathématique consiste à définir le système linéaire qui va permettre de calculer les déformées de la structure de la pièce flexible 11 et les actions extérieures appliquées et ceci en chaque point du maillage de la pièce flexible 11, maillage qui fait partie des données d'entrée de l'algorithme.

Par convention les vecteurs lignes ou colonnes sont exprimés en une lettre majuscule soulignée d'un trait et les matrices sont exprimées en une lettre majuscule soulignée de deux traits.

Par convention si on ne spécifie pas le type d'un vecteur, ce vecteur est un vecteur colonne.

Soit $\underline{K}$ la matrice de rigidité de la structure la pièce flexible 11, ce paramètre fait aussi partie des données d'entrée de l'algorithme.

Soit $\underline{U}$ le vecteur colonne représentant les déformées de la structure de la pièce flexible 11 en chaque point du maillage de la pièce flexible 11. $\underline{U}$ vecteur colonne contient les déplacements $U_x$, $U_y$, $[U_z$ exprimés dans un repère (O, X,Y,Z) défini sur la pièce rigide 12 et contient les angles de rotation $\alpha,\beta,\gamma$ par rapport à ce même repère.

La figure 5 illustre ces paramètres.

Soit alors $\underline{F}$ le vecteur colonne représentant les actions extérieures appliquées en chaque point du maillage de la pièce flexible 11. En général $\underline{F}$ représente les efforts et les moments appliqués en chaque point du maillage de la pièce flexible 11.

La rigidité qui lie le chargement (ensemble des efforts et moments) appliqué et les déplacements peut être traduite avec le modèle éléments finis sous forme matricielle de la façon suivante: $\underline{F} = \underline{K} . \underline{U}$. Cette relation peut aussi s'écrire en concaténant la matrice $\underline{K}$ et la matrice identité $\underline{Id}$ :

$$\left(\underline{\underline{K}} \quad \left(-\underline{\underline{Id}}\right)\right) . \left(\frac{\underline{U}}{\underline{F}}\right) = \left(\frac{\underline{0}}{\underline{0}}\right) \qquad (Eq.\ 1)$$

On peut ajouter à cette relation une formule matricielle traduisant les conditions aux limites suivantes (hyperstatismes, pression du joint, efforts extérieurs ...):

$$ \underline{\underline{ConditionsLimites}} \cdot \left( \frac{\underline{U}}{\underline{F}} \right) = \underline{Valeurs} . \qquad (Eq.\ 2) $$

On note que *Valeurs* est un vecteur colonne

D'où la formule matricielle globale :

$$ \left( \begin{array}{c} \underline{\underline{K}} \quad -\underline{\underline{Id}} \\ \hline \underline{\underline{ConditionsLimites}} \end{array} \right) \left( \frac{\underline{U}}{\underline{F}} \right) = \left( \begin{array}{c} \underline{0} \\ \hline \underline{Valeurs} \end{array} \right) \qquad (Eq.\ 3) $$

Cette formule permet d'écrire un système d'équations linéaires et sa résolution permet de calculer l'intégralité des valeurs de $\underline{U}$ et $\underline{F}$, c'est à dire de calculer les valeurs des déplacements et des efforts en chaque point du maillage de la pièce flexible 11.

L'algorithme utilise la méthode suivante, en considérant trois états de la pièce 11.

1/ Le premier état E1 est l'état initial qui est un état « libre ». Libre dans le sens où cet état est un état isostatique dont on connaît les sollicitations, dont la pesanteur. Il est représenté figure 6a. Par exemple dans l'étape 101 de la figure 2, la porte qui représente la pièce flexible 11 dans l'algorithme est positionnée dans une position la plus proche possible de sa position finale assemblée dans l'armature sans imposer de contraintes à la pièce flexible (la porte dans le présent exemple) ni à la pièce rigide (l'armature dans ce même exemple).

2/ Le deuxième état E2 est un état avec contrainte de la pièce 11 dans la pièce 12. La pièce flexible 11 est mise dans cet état en configuration d'assemblage avec l'ensemble des ses contraintes.

Le passage de l'état initial E1 à cet état avec contrainte E2 est représenté figure 6b ; dans cette figure le trait pointillé représente la pièce flexible 11 dans ce deuxième état E2 et le trait continu représente la pièce flexible 11 dans l'état initial E1. Il y a donc dans cet état initial E1 une déformation possible de la pièce flexible 11 pour s'assembler avec la pièce rigide 12.

Dans l'exemple de la figure 2, la porte est positionnée dans l'armature telle que la position de la porte correspond bien en certains points à la position finale de la porte dans l'armature. La porte par rapport à l'état initial E1 est donc « forcée » dans l'armature, c'est un état avec contrainte.

3/ Le troisième état E3 correspond à l'état final.

Cet état final E3 est idéal lorsque la pièce flexible 11 est en contact avec la pièce rigide 12 sur tous ses points de contact théorique et que les points où des conditions d'assemblage sont à réaliser, réalisent ces conditions.

L'état final E3 est obtenu en effectuant des réglages à partir de l'état avec contrainte E2.

Le passage de l'état avec contrainte E2 à cet état final E3 est représenté figure 6c. Dans cette figure le trait pointillé représente la pièce flexible 11 dans cet état final E3, et le trait continu représente la pièce flexible 11 dans l'état avec contrainte E2.

Le but de l'algorithme est de calculer les réglages à effectuer pour obtenir un état final E3 optimal, c'est à dire, qui s'approche le plus d'un état idéal. On définit ici le mot optimal comme caractérisé par une résultante minimale de déplacement et/ou d'efforts.

Soit un ensemble de réglages quelconque effectués sur un ensemble quelconque de points du maillage de la pièce flexible 11, les déplacements et les efforts en chaque point du maillage de la pièce flexible 11 sont des phénomènes considérés linéaires, donc on peut les modéliser de la façon suivante :

$$ \underline{U}_{final} = \underline{U}_0 + \underline{U}_{def} + \underline{U}_{fit} \qquad (Eq.\ 4) $$

$$ \underline{F}_{final} = \underline{F}_0 + \underline{F}_{def} + \underline{F}_{fit} \qquad (Eq.\ 5) $$

où :

$U_0$ et $F_0$ sont les déplacements et les efforts en chaque point du maillage de la pièce flexible 11 (déformée) induit par la mise en position isostatique et par la mise sous contrainte de la pesanteur de la pièce 11 (état « libre » E1).

$U_{def}$ et $F_{def}$ sont les déplacements et les efforts en chaque point du maillage de la pièce flexible 11 (déformée) induit par la mise sous contrainte de la pièce 11 (état avec contrainte E2).

$U_{fit}$ et $F_{fit}$ sont les déplacements et les efforts en chaque point du maillage de la pièce flexible 11 induits par l'ensemble des réglages.

$U_{final}$ et $F_{final}$ correspondent aux déplacements et aux efforts finaux en chaque point du maillage de la pièce flexible 11 (état final E3).

L'algorithme a pour fonction d'optimiser l'état final E3 pour répondre aux exigences de l'assemblage. Ce qui revient à optimiser les valeurs des exigences en fonction de $U_{fit}$ et $F_{fit}$ qui eux même dépendent des réglages.

Dans la suite de cette mise en oeuvre, on réduit les points à étudier aux points de conditions fonctionnelles, parmi les points du maillage de la pièce flexible 11. On rappelle que ces points de conditions fonctionnelles sont constitués des points de contact théorique entre les pièces et des points où des conditions d'assemblage sont à réaliser.

Soit $U_0$ l'écart mesuré entre la pièce flexible 11 et la pièce rigide 12 lorsque la pièce flexible 11 est dans l'état initial E1 (état libre). Comme cet état E1, où des conditions d'assemblage sont à réaliser, est dans un état de sollicitations connues, on connaît également $F_0$. Ces mesures sont faites dans l'étape 102.

Soit $U_{ref}$ l'écart mesuré entre la pièce flexible 11 et la pièce rigide 12 lorsque la pièce 11 est dans l'état avec contrainte E2. Ces mesures sont faites dans l'étape 104. On obtient donc la formule suivante :

$$U_{def} = U_{ref} - U_0 \qquad\qquad (Eq.\ 6)$$

Les efforts aux points de conditions fonctionnelles $F_{def}$ sont calculés en considérant la géométrie générale de la pièce flexible 11 qui peut être établie avec les méthodes des éléments finis en considérant les mesures $U_{def}$ comme conditions aux limites.

En imposant les réglages comme conditions aux limites, on établit :

$$U_{i\ fit} = \sum_{j=1}^{n} a_{ij} R_j \qquad\qquad (Eq.\ 7)$$

$$F_{i\ fit} = \sum_{j=1}^{n} b_{ij} R_j \qquad\qquad (Eq.\ 8)$$

et dans ces formules :

n représente le nombre de points de réglages,
i représente le $i^{ème}$ point de conditions fonctionnelles,
$R_j$ représente le $j^{ène}$ réglage, c'est à dire le réglage sur le $j^{ème}$ point de conditions fonctionnelles,
$U_{i\ fit}$ est la restriction de $U_{fit}$ au $i^{ème}$ point de conditions fonctionnelles,
$F_{i\ fit}$ est la restriction de $F_{fit}$ au $i^{ème}$ point de conditions fonctionnelles,
$a_{ij}$ et $b_{ij}$ sont les coefficients d'influence du $j^{ème}$ réglage sur le $i^{ème}$ point de conditions fonctionnelles. Ces coefficients sont des vecteurs lignes, ce qui permet de distinguer les influences en fonction des axes (un réglage sur la composante X de $R_j$ peut avoir une influence différente sur chacun des axes X, Y, Z de $U_{i\ fit}$ ou $F_{i\ fit}$)

En utilisant les équations précédentes et les équations $U = U_{ref} + U_{fit}$ et $F = F_{ref} + F_{fit}$ restreintes en un $i^{ème}$ point de conditions fonctionnelles, on obtient alors les équations pour chaque point i de conditions fonctionnelles :

$$U_i = U_{i\ def} + \sum_{j=1}^{n} a_{ij} R_j \qquad\qquad (Eq.\ 9)$$

$$F_i = F_{i\ def} + \sum_{j=1}^{n} b_{ij} R_j \qquad\qquad (Eq.\ 10)$$

Les vecteurs des déplacements et des efforts $U_i$ et $F_i$ « idéaux » peuvent être déduits de l'assemblage théorique. (on rappelle que l'état final E3 est idéal lorsque la pièce flexible 11 est en contact avec la pièce rigide 12 sur tous ses points de contact théorique et que les points où des conditions d'assemblage sont à réaliser, réalisent ces conditions).

La recherche d'un jeu de réglage optimal $\left\{ R_j^{optimal} \right\}$ consiste à s'approcher le plus de ces valeurs $U_i$ et $F_i$ « idéaux » en modifiant les $R_j$.

Cette recherche peut s'effectuer en faisant varier en valeurs discrètes les $R_j$ dans leur plage de variations possibles (données d'entrée 4) et en comparant les $U_i$ et $F_i$ par rapport à leur valeurs « idéales ». Le jeu de réglage $\left\{ R_j^{optimal} \right\}$ qui fournit un résultat le plus proche des valeurs « idéales » est alors fourni comme donnée de sortie via l'interface de sortie.

Dans la présente description nullement limitative, la recherche du jeu de réglage optimal $\left\{ R_j^{optimal} \right\}$ est effectuée en utilisant les conditions d'assemblage $C_q$ qui sont exprimées dans ce cas sur les $U_i$ et donc en fonction des $R_i$. Ces conditions d'assemblage $Cq$ sont spécifiques à l'assemblage théorique.

Soit p le nombre de conditions d'assemblage $C_q$ exprimées.

$$C_q = C_{q0} + \sum_{j=1}^{n} c_{qj} R_j \quad \text{pour } q \in [1,p] \quad \textit{(Eq. 11)}$$

avec $C_{q0}$ condition d'assemblage correspondante à la condition d'assemblage $C_q$, dans l'état initial E2.

L'objectif ici est de trouver une solution au problème d'optimisation. C'est pourquoi on définit un paramètre k qui est un indicateur de respect des conditions d'assemblage. Les conditions d'assemblage sont considérées comme bornées par des valeurs minimales et maximales $[A_q, B_q]$.

On peut donc utiliser le paramètre k de sorte que ces intervalles deviennent $[A_q + k(B_q - A_q), B_q - k(B_q - A_q)]$.

Le problème d'optimisation se résume alors à maximiser k pour :

$$C_{q0} + \sum_{j=1}^{n} c_{qj} R_j \leq B_q - k(B_q - A_q) \quad \textit{(Eq. 12)}$$

$$C_{q0} + \sum_{j=1}^{n} c_{qj} R_j \geq A_q + k(B_q - A_q) \quad \textit{(Eq. 13)}$$

La mise en oeuvre du procédé selon l'invention (figure 1), utilisant l'algorithme de calcul décrit plus haut, va être décrite en utilisant l'exemple non limitatif de l'assemblage d'une porte coulissante sur un châssis.

Le procédé que l'homme du terrain doit mettre en oeuvre pour mener à bien un assemblage selon l'invention comporte six étapes (101 à 106).

Une première étape 101 consiste à effectuer le montage des pièces à assembler dans un état non contraint. Cette étape consiste à assembler toutes les pièces pouvant être assemblées entre elles sans avoir à appliquer de contrainte mécanique, formant ainsi un ensemble d'éléments assemblés, puis à les positionner les unes par rapport aux autres pour se rapprocher de l'assemblage final visé. On obtient donc un ensemble composé de N éléments assemblés chacun à partir d'un certain nombre de pièces.

Ces éléments sont rapprochés les uns à coté des autres dans une position globale la plus proche de l'état final à atteindre pour l'assemblage visé, mais en n'appliquant aucune contrainte à ces éléments.

Dans l'exemple de l'assemblage d'une porte coulissante sur un châssis, dans l'étape 101, toutes les pièces de la porte sont assemblées pour former un élément porte sans être encore fixées à un élément constitué de l'armature (dans cet exemple le nombre d'éléments N est égal à 2). La porte est amenée dans une position la plus proche possible de la position qu'elle occupera à la fin de l'assemblage vis à vis de l'armature, mais sans aucune contrainte.

Une deuxième étape 102 consiste à mesurer alors les écarts géométriques entre les pièces (faisant chacune partie d'un élément assemblé dans l'étape 101) qu'il faudra assembler entre elles pour assembler ces N éléments entre eux. Ces mesures doivent être effectuées sur les points considérés comme points de conditions fonctionnelles. Ces écarts sont mesurés entre les points appartenant à une même famille de conditions (c'est à dire entre des points qui devraient se trouver finalement confondus si l'assemblage est parfait).

En reprenant l'exemple de la famille ($C_{11}$, $C_{12}$) précédemment citée, le point $C_{11}$ étant situé sur la pièce 11 et le point $C_{12}$ étant situé sur la pièce 12, la mise en oeuvre de l'algorithme nécessitant la connaissance de cet écart dans un repère cartésien ainsi que de l'orientation de chacune des deux pièces 11 et 12, le nombre de paramètres nécessaires pour la famille ($C_{11}$, $C_{12}$) est égal à six. La mesure pour cette famille peut donc être effectuée en mesurant les six écarts entre six points autour de $C_{11}$ sur la pièce 11 et les six points respectifs sur la pièce 12. Le mode de réalisation de ces mesures est connu de l'homme de l'art et sort du cadre de la présente invention.

Une troisième étape 103 consiste en une mise en contrainte des pièces. Les N éléments créés dans l'étape 101 précédente sont assemblés en réalisant toutes les liaisons mécaniques, en appliquant alors les efforts mécaniques nécessaires à ces liaisons.

Une quatrième étape 104 consiste à mesurer les écarts obtenus entre les pièces sous contrainte. Dans cet exemple d'un mode de réalisation de l'invention, les mesures sont faites d'une façon identique à l'étape 102 et sur une partie de ces points. Les erreurs de fabrication des pièces conduisent à ce que ces écarts restent éventuellement non nuls pour une partie d'entre eux.

Dans la présente description, les mesures à effectuer dans l'état avec contrainte E2, lors de l'étape 104, sont limitées aux points de contact théorique. Les valeurs des points où des conditions d'assemblage sont à réaliser sont déduites dans l'algorithme de la géométrie générale de la pièce flexible 11, qui peut être établie avec une méthode d'éléments finis en considérant les mesures des points de contact théorique faites à l'étape 104 comme conditions aux limites.

Une cinquième étape 105 consiste à exécuter l'algorithme avec les données d'entrées du deuxième type, constituées des mesures effectuées aux étapes 102 et 104.

L'algorithme recherche les meilleurs réglages (données de sortie) à faire en fonction des mesures et des données d'entrée concernant la physique des pièces. Ces données d'entrée ne sont pas illustrées sur la figure 1 car elles sont considérées pré-entrées dans l'interface et ne sont donc pas demandées à l'opérateur dans cette étape.

L'algorithme signale également dans cette étape si les réglages possibles ne sont pas suffisants pour garantir la qualité d'assemblage, au vu des mesures faites et des conditions d'assemblage à respecter, et donc identifier la ou les pièces à mettre au rebut ou à retoucher. De la même manière, il identifie les cas où, soit le nombre de pièces flexibles, soit le nombre de points de réglages, est insuffisant pour permettre un assemblage conforme aux critères prédéterminés.

Une sixième étape 106 consiste à effectuer les réglages proposés par le logiciel mettant en oeuvre l'algorithme via son interface de sortie ou à recommencer l'assemblage réel avec d'autres pièces.

Il ressort clairement que dans le présent procédé, la phase de mesure est réalisée uniquement sur des écarts entre les pièces pré-assemblées (et non réglées). Les positions initiales relatives des pièces à assembler n'ont pas à être spécifiées ni connues.

Ceci permet de réduire significativement le temps et le coût de mesure en choisissant des outils adaptés à mesurer uniquement ces écarts. Des écarts de temps d'assemblage de 75% ont été mesurés par utilisation du présent procédé.

Par ailleurs, l'algorithme d'optimisation de réglages prend en compte des contraintes d'assemblage et la rigidité des pièces. Cet algorithme permet alors de minimiser les interfaces géométriques et les efforts d'assemblage.

De plus, les informations de réglages avant assemblage sont tracées et peuvent par la suite être exploitées par le bureau d'étude pour des études de non-conformité ou pour permettre une amélioration continue des pièces.

La portée de la présente invention ne se limite pas aux détails des formes de réalisation ci-dessus considérées à titre d'exemple, mais s'étend au contraire aux modifications à la portée de l'homme de l'art.

Dans une variante, les mesures faites à l'étape 102, dans l'état initial E1, peuvent être des mesures absolues des pièces flexibles 11, effectuées par exemple dans le repère local à chaque pièce.

S'il est plus facile sur le site où s'effectue l'assemblage réel de mesurer les dimensions des pièces au lieu des écarts entre deux points, l'interface peut proposer ce type d'entrées et l'algorithme déduit les écarts géométriques en appliquant des formules adéquates (formules de transformation géométrique).

Dans une autre variante, l'interface d'entrée du logiciel peut proposer à l'homme du terrain une liste de choix de mesures à effectuer ce qui permet de s'adapter à la stratégie et aux moyens de mesure existants du site réalisant cet assemblage. L'algorithme déduit ici encore les écarts par application des formules de transformation géométrique adéquates.

Dans une variante, les mesures à effectuer dans l'état avec contrainte E2, lors de l'étape 104, sont effectuées sur les mêmes points que les mesures effectuées dans l'état initial dans l'étape 102.

Dans une variante la recherche du jeu de réglage optimal $\left\{ R_j^{optimal} \right\}$ peut être effectuée en utilisant une méthode de moindres carrés ou toute autre méthode qui optimise une fonction sous contrainte.

**Revendications**

1. Procédé de détermination de réglages à effectuer lors d'un assemblage de deux ou plusieurs pièces entre elles, ces dites pièces étant conçues à partir d'un modèle géométrique théorique permettant cet assemblage, ces dites pièces pouvant présenter des défauts géométriques par rapport au dit modèle géométrique théorique, ces dites pièces comprenant au moins une pièce flexible (11), une partie au moins de ces dites pièces comportant des points de réglage géométrique, ce dit assemblage devant respecter des conditions d'assemblage en valeurs maximales d'efforts et déplacements,

   la détermination des réglages préférés $\left\{ R_j^{optimal} \right\}$ à effectuer permettant de réaliser cet assemblage, étant faite à partir de mesures de paramètres caractérisant la géométrie avec défaut, lesdites mesures étant effectuées lors de l'assemblage, les paramètres mesurés étant constitués par des écarts géométriques ($U_0$, $U_{def}$) en un ensemble de points des pièces de l'assemblage suffisant à caractériser l'assemblage réel,
   **caractérisé en ce que** les mesures à effectuer caractérisant la géométrie avec défaut consistent :

       d'une part (102) en une mesure d'écart géométrique ($U_0$) entre des points de contact d'assemblage, ou entre des points où des conditions d'assemblage sont à réaliser, ces points étant respectivement situés sur une pièce de l'assemblage et sur une autre pièce devant s'assembler à la première, dans un état initial (E1) de l'assemblage hors contrainte,
       et d'autre part (104) en une mesure d'écart géométrique ($U_{ref}$) de ces mêmes points dans un état avec contrainte (E2).

2. Procédé selon la revendication 1 **caractérisé en ce que** les points à mesurer dans l'état avec contrainte (E2) sont restreints aux points de contact d'assemblage.

3. Procédé selon la revendication 1 **caractérisé en ce que** les mesures à effectuer sont des mesures de dimensions de certaines pièces, dans un repère local à la pièce mesurée.

4. Procédé selon l'une quelconque des revendications précédentes, **caractérisé en ce que** les réglages préférés $\left\{ R_j^{optimal} \right\}$ sont calculés en créant une modélisation du comportement mécanique des pièces, à partir de données d'entrée comprenant :

       - un maillage et une matrice de rigidité pour chacune des pièces flexibles du modèle théorique,
       - des conditions aux limites (déplacements imposés CL1, efforts imposés CL2, liaisons impliquant une raideur CL3) du modèle théorique,
       - des points de conditions fonctionnelles, consistant en points de contact théorique entre les pièces et des points où des conditions d'assemblage sont à réaliser,
       - des points de réglages et leur plage de variations géométriques maximums estimées,
       - ainsi que les paramètres mesurés.

   la modélisation consistant à définir un système linéaire qui permette alors de calculer les déformées de la structure des pièces flexibles et les actions extérieures appliquées en chaque point du maillage des pièces flexibles.

5. Procédé selon la revendication 4 **caractérisé en ce que** les réglages préférés $\left\{ R_j^{optimal} \right\}$ sont sélectionnés en comparant les conditions d'assemblage obtenues en parcourant une plage de valeurs spécifique à chaque réglage pour l'ensemble des réglages.

6. Procédé selon la revendication 4 **caractérisé en ce que** les réglages préférés $\left\{ R_j^{optimal} \right\}$ sont sélectionnés en appliquant un algorithme d'optimisation par méthode de moindres carrés.

**7.**

Procédé selon la revendication 4 **caractérisé en ce que** les réglages préférés $\left\{ R_j^{optimal} \right\}$ sont sélectionnés en appliquant un algorithme d'optimisation selon une fonction d'optimisation sous contraintes.

**8.** Logiciel, **caractérisé en ce qu'**il permet la mise en oeuvre d'un procédé selon l'une quelconque des revendications précédentes.

**9.** Procédé d'assemblage de deux ou plusieurs pièces entre elles, ces dites pièces étant conçues à partir d'un modèle géométrique théorique permettant cet assemblage, ces dites pièces pouvant présenter des défauts géométriques par rapport au dit modèle géométrique théorique, ces dites pièces comprenant au moins une pièce flexible (11), une partie au moins de ces dites pièces comportant des points de réglage géométrique, ce dit assemblage devant respecter des conditions d'assemblage en valeurs maximales d'efforts et déplacements, **caractérisé en ce qu'**il comporte des étapes de :

- assemblage (101) toutes les pièces pouvant être assemblées entre elles sans avoir à appliquer de contrainte mécanique, formant ainsi un ensemble d'éléments dits pré-assemblés,
- positionnement des éléments pré-assemblés les uns par rapport aux autres pour se rapprocher de l'assemblage final visé,
- mesure (102) d'écarts géométriques ($U_0$) entre certains points d'au moins une partie des pièces, en l'absence de contraintes mécaniques,
- mise en contrainte (103), dans laquelle les éléments sont assemblés entre eux, en réalisant toutes les liaisons mécaniques entre pièces à assembler, en appliquant les efforts mécaniques nécessaires à assurer ces liaisons,
- mesure (104) des écarts géométriques ($U_{ref}$) sous contrainte en au moins une partie des points de mesure d'écart géométrique hors contrainte,
- détermination (105) de réglages préférés $\left\{ R_j^{optimal} \right\}$ minimisant la résultante des efforts et déplacements en un ensemble de points de maillage des pièces flexibles, cette détermination étant réalisée par un procédé selon l'une quelconque des revendications 1 à 8,
- application (106) de ces réglages préférés aux pièces réglables.

**Patentansprüche**

**1.** Verfahren zum Bestimmen von Justierungen, die während eines Zusammenbauens von zwei oder mehreren Teilen miteinander durchzuführen sind, wobei diese Teile ausgehend von einem theoretischen geometrischen Modell konzipiert sind, das dieses Zusammenbauen ermöglicht, wobei diese Teile geometrische Fehler in Bezug auf das theoretische geometrische Modell aufweisen können, wobei diese Teile mindestens ein flexibles Teil (11) aufweisen, wobei mindestens ein Abschnitt dieser Teile Punkte zum geometrischen Justieren aufweist, wobei dieses Zusammenbauen Zusammenbaubedingungen hinsichtlich der Maximalwerte der Kräfte und Verschiebungen einhalten muss,

wobei das Bestimmen der bevorzugten Justierungen $\left\{ R_j^{optimal} \right\}$, die durchzuführen sind,

die es ermöglichen, dieses Zusammenbauen durchzuführen, ausgehend von Messungen von Parametern, die die Geometrie mit Fehler charakterisieren, erfolgt, wobei die Messungen während des Zusammenbauens durchgeführt werden, wobei die gemessenen Parameter durch geometrische Abweichungen ($U_0$, $U_{def}$) in einer Gruppe von Punkten der Teile der Baugruppe gebildet werden, die ausreichend sind, um die tatsächliche Baugruppe zu charakterisieren,

**dadurch gekennzeichnet, dass** die Messungen, die durchzuführen sind, die die Geometrie mit Fehler kennzeichnen, in Folgendem bestehen:

einerseits (102) in einer Messung der geometrischen Abweichung ($U_0$) zwischen den Berührungspunkten der Baugruppe oder zwischen Punkten, an denen die Zusammenbaubedingungen zu erfüllen sind, wobei diese Punkte jeweils auf einem Teil der Baugruppe und auf einem anderen Teil, der mit dem ersten zusammenzubauen ist, in einem Anfangszustand (E1) der Baugruppe ohne Belastung angeordnet sind,

und anderseits (104) in einer Messung der geometrischen Abweichung ($U_{ref}$) dieser gleichen Punkte in einem Zustand mit Belastung (E2).

2. Verfahren nach Anspruch 1, **dadurch gekennzeichnet, dass** die Punkte, die in dem Zustand mit Belastung (E2) zu messen sind, auf die Berührungspunkte der Baugruppe begrenzt sind.

3. Verfahren nach Anspruch 1, **dadurch gekennzeichnet, dass** die Messungen, die durchzuführen sind, Messungen von Abmessungen bestimmter Teile in einem lokalen Bezugssystem zu dem gemessenen Teil sind.

4. Verfahren nach einem der vorhergehenden Ansprüche, **dadurch gekennzeichnet, dass** die bevorzugten Justierungen $\left\{R_j^{optimal}\right\}$ berechnet werden, indem eine Modellierung des mechanischen Verhaltens der Teile ausgehend von Eingabedaten erstellt wird, die Folgendes aufweisen:

- ein Netz und eine Steifheitsmatrix für jedes der flexiblen Teile des theoretischen Modells,
- Grenzbedingungen (Einspannungen CL1, Beanspruchungen CL2, Verbindungen, die eine Steifigkeit erfordern CL3) des theoretischen Modells,
- Punkte von Funktionsbedingungen, die in theoretischen Berührungspunkten zwischen den Teilen und Punkten bestehen, wo Zusammenbaubedingungen zu erstellen sind,
- Justierpunkte und ihr Bereich von geschätzten maximalen geometrischen Variationen
- sowie die gemessenen Parameter,

wobei die Modellierung darin besteht, ein lineares System zu definieren, das es ermöglicht, die Verformungen der Struktur der flexiblen Teile und die externen Einwirkungen zu berechnen, die in jedem Punkt des Netzes der flexiblen Teile angewendet werden.

5. Verfahren nach Anspruch 4, **dadurch gekennzeichnet, dass** die bevorzugten Justierungen $\left\{R_j^{optimal}\right\}$ gewählt werden, indem die erhaltenen Zusammenbaubedingungen verglichen werden, indem ein Bereich von spezifischen Werten bei jedem Justieren für alle Justierungen durchsucht wird.

6. Verfahren nach Anspruch 4, **dadurch gekennzeichnet, dass** die bevorzugten Justierung $\left\{R_j^{optimal}\right\}$ gewählt werden, indem ein Optimierungsalgorithmus durch die Methode der kleinsten Quadrate angewendet wird.

7. Verfahren nach Anspruch 4, **dadurch gekennzeichnet, dass** die bevorzugten Justierungen $\left\{R_j^{optimal}\right\}$ gewählt werden, indem ein Optimierungsalgorithmus nach einer Optimierungsfunktion unter Belastung angewendet wird.

8. Software, **dadurch gekennzeichnet, dass** es die Durchführung eines Verfahrens nach einem der vorhergehenden Ansprüche ermöglicht.

9. Verfahren zum Zusammenbauen von zwei oder mehreren Teilen miteinander, wobei diese Teile ausgehend von einem theoretischen geometrischen Modell konzipiert sind, das dieses Zusammenbauen ermöglicht, wobei diese Teile geometrische Fehler in Bezug auf das theoretische geometrische Modell aufweisen können, wobei diese Teile mindestens ein flexibles Teil (11) aufweisen, wobei mindestens ein Abschnitt dieser Teile Punkte zum geometrischen Justieren aufweist, wobei dieses Zusammenbauen Zusammenbaubedingungen hinsichtlich der Maximalwerte der Kräfte und Verschiebungen einhalten muss, **dadurch gekennzeichnet, dass** es die folgenden Schritte aufweist:

- Zusammenbauen (101) aller Teile, die miteinander zusammengebaut werden können, ohne eine mechanische Beanspruchung ausüben zu müssen, wobei somit eine Anordnung von sogenannten vormontierten Elementen gebildet wird,
- Positionieren der vormontierten Elemente relativ zueinander, um der angestrebten fertigen Baugruppe nahe zu kommen,
- Messen (102) der geometrischen Abweichungen ($U_0$) zwischen gewissen Punkten von mindestens einem Teil der Teile in Abwesenheit von mechanischer Belastung,
- unter Belastung Stellen (103), wobei die Elemente miteinander zusammengebaut werden, indem alle mechanischen Verbindungen zwischen Teilen, die zusammenzubauen sind, hergestellt werden, indem die mechanischen Kräfte angewendet werden, die erforderlich sind, um diese Verbindungen zu gewährleisten,
- Messen (104) der geometrischen Abweichungen ($U_{ref}$) unter Belastung in mindestens einem Teil der Punkte der Messung der geometrischen Abweichung ohne Belastung,

- Bestimmen (105), von bevorzugten Justierungen $\left\{ R_j^{optimal} \right\}$ indem die Resultierende der Kräfte und Verschiebungen in einer Gruppe von Netzpunkten der flexiblen Teile minimiert wird, wobei dieses Bestimmen nach einem Verfahren nach einem der Ansprüche 1 bis 8 durchgeführt wird,
- Anwenden (106) dieser bevorzugten Justierungen auf die justierbaren Teile.

**Claims**

1. Method for determining adjustments to be made when assembling two or more parts together, these said parts being designed from a theoretical geometrical model allowing for this assembly, these said parts being able to exhibit geometrical defects relative to said theoretical geometrical model, these said parts comprising at least one flexible part (11), at least some of these said parts comprising geometrical adjustment points, this said assembly having to observe assembly conditions in terms of maximum load and displacement values,

the determination of the preferred adjustments $\left\{ R_j^{optimal} \right\}$ to be carried out to make it possible to produce this assembly being made from measurements of parameters characterizing the geometry with defect, said measurements being performed during the assembly, the measured parameters consisting of geometrical deviations ($U_0$, $U_{def}$) at a set of points of the parts of the assembly that is sufficient to characterize the real assembly,

**characterized in that** the measurements to be performed characterizing the geometry with defect consist:

on the one hand (102) in a measurement of geometrical deviation ($U_0$) between assembly contact points, or between points where assembly conditions are to be produced, these points being respectively situated on one part of the assembly and on another part having to be assembled to the first, in an initial state (E1) of the assembly without stress,
and on the other hand (104) in a measurement of geometrical deviation ($U_{ref}$) of these same points in a state with stress (E2).

2. Method according to Claim 1, **characterized in that** the points to be measured in the state with stress (E2) are restricted to the assembly contact points.

3. Method according to Claim 1, **characterized in that** the measurements to be performed are measurements of dimensions of certain parts, in a reference frame local to the measured part.

4. Method according to any one of the preceding claims, **characterized in that** the preferred adjustments $\left\{ R_j^{optimal} \right\}$ are calculated by creating a modelling of the mechanical behaviour of the parts, based on input data comprising:

- a meshing and a matrix of rigidity for each of the flexible parts of the theoretical model,
- conditions at the limits (imposed displacements CL1, imposed loads CL2, links involving a stiffness CL3) of the theoretical model,
- functional condition points, consisting of theoretical contact points between the parts and points where assembly conditions are to be produced,
- adjustment points and their range of estimated maximum geometrical variations,
- and the measured parameters,

the modelling consisting in defining a linear system which then makes it possible to calculate the elastic lines of the structure of the flexible parts and the external actions applied at each point of the meshing of the flexible parts.

5. Method according to Claim 4, **characterized in that** the preferred adjustments $\left\{ R_j^{optimal} \right\}$ are selected by comparing the assembly conditions obtained by working through a range of values specific to each adjustment for all of the adjustments.

**6.**

Method according to Claim 4, **characterized in that** the preferred adjustments $\left\{R_j^{optimal}\right\}$ are selected by applying a least squares method optimization algorithm.

**7.** Method according to Claim 4, **characterized in that** the preferred adjustments $\left\{R_j^{optimal}\right\}$ are selected by applying an optimization algorithm according to a function of optimization under stress.

**8.** Software, **characterized in that** it makes it possible to implement a method according to any one of the preceding claims.

**9.** Method for assembling two or more parts together, these said parts being designed from a theoretical geometrical model allowing for this assembly, these said parts being able to exhibit geometrical defects relative to said theoretical geometrical model, these said parts comprising at least one flexible part (11), at least some of these said parts comprising geometrical adjustment points, this said assembly having to observe assembly conditions in terms of maximum load and displacement values, **characterized in that** it comprises steps of:

- assembly (101) of all the parts that can be assembled together without having to apply any mechanical stress, thus forming an assembly of so-called pre-assembled elements,
- positioning of the pre-assembled elements relative to one another to approximate the targeted final assembly,
- measurement (102) of geometrical deviations ($U_0$) between certain points of at least some of the parts, in the absence of mechanical stresses,
- stressing (103), in which the elements are assembled together, by producing all the mechanical links between parts to be assembled, by applying mechanical loads necessary to ensure these links,
- measurement (104) of the geometrical deviations ($U_{ref}$) under stress at at least some of the non-stressed geometrical deviation measurement points,
- determination (105) of preferred adjustments $\left\{R_j^{optimal}\right\}$ minimizing the resultant of the loads and displacements at a set of meshing points of the flexible parts, this determination being made by a method according to any one of Claims 1 to 8,
- application (106) of these preferred adjustments to the adjustable parts.

Montage des pièces
en état non contraint —101

Mesure des écarts
en état non contraint —102

Mise en contrainte
des pièces —103

Mesure des écarts
en état sous contrainte —104

Exécution
de l'algorithme —105

Mise en oeuvre des
réglages proposés —106

**Fig. 1**

**Fig. 2**

**Fig. 3**

**Fig. 4**

**Fig. 5**

**Fig. 6a,6b,6c**

## EP 2 374 046 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* US 5380978 A